# FASCICULE DE BREVET EUROPEEN

(11) **EP 1 943 120 B1**
(45) Date de publication et mention de la délivrance du brevet: **06.07.2011**
(21) Numéro de dépôt: 06831311.3
(22) Date de dépôt: 27.10.2006
(51) Int. Cl.: B60J 10/02

(54) **ELEMENT DE CARROSSERIE POUR VEHICULE AUTOMOBILE, JOINT DE FINITION POUR CET ELEMENT, ET PROCEDE D'ASSEMBLAGE D'UN PARE-BRISE**
AUFBAUELEMENT FÜR EIN KRAFTFAHRZEUG, ENDABDICHTUNG FÜR DIESES ELEMENT UND VERFAHREN ZUR MONTAGE EINER WINDSCHUTZSCHEIBE
BODY ELEMENT FOR A MOTOR VEHICLE, FINISH SEAL FOR SAID ELEMENT AND METHOD OF ASSEMBLING A WINDSCREEN

(30) Priorité: 02.11.2005 FR 0511151
(43) Date de publication de la demande: 16.07.2008
(73) Titulaire: Renault s.a.s., 92100 Boulogne Billancourt (FR)
(72) Inventeur: CORDIER, Philippe, F-91310 Longpont-sur-Orge (FR)
(86) Numéro de dépôt international: PCT/FR2006/051119
(87) Numéro de publication internationale: WO 2007/051942

(56) Documents cités:
- WO-A-01/08915
- DE-A1- 4 026 205
- DE-A1- 4 429 568
- DE-A1- 19 543 192

## Description

L'invention concerne, de façon générale, les techniques de construction automobile et de carrossage.

Plus précisément, l'invention concerne, selon un premier aspect, un élément de carrosserie pour véhicule automobile, comprenant une feuillure de baie, un pare-brise, un cordon de colle par lequel une première face du pare-brise est collée à la feuillure par sa périphérie, et un joint de finition bordant le pare-brise.

Un élément de carrosserie de ce type est par exemple connu de l'homme du métier par le brevet FR 2 516 588 de la Demanderesse.

Les documents W00108915 et DE4429568 montrent des modes de réalisation d'éléments de carrosserie tels que ci-dessus, dans lesquels le joint de finition comprend une lèvre de liaison incorporée au cordon de colle.

Aujourd'hui, un joint de finition doit pouvoir se monter avec une force d'insertion inférieure à 500 N/m, typiquement de l'ordre de 300 N/m pour un montage manuel, et néanmoins présenter une force d'arrachement au moins égale à 500 N/m à la température ambiante, typiquement 700 N/m.

Le principal problème rencontré avec les joints sans armature, en particulier avec les joints réalisés en Santoprène ® ou en EPDM, réside dans le fait que leur force d'arrachement chute fortement pour les températures supérieures à 70 degrés, jusqu'à atteindre typiquement une valeur inférieure à 300 N/m.

Par ailleurs, les solutions classiques qui consistent à intégrer une armature au joint ou à déposer un mastic au fond de la pince que forme la section du joint sont à la fois contraignantes en terme de prix et d'une efficacité non optimale.

Dans ce contexte, l'invention a pour but d'améliorer les solutions des documents cités ci-dessus.

Un autre but est de proposer une autre solution que celles des documents ci-dessus pour répondre au problème que pose la tenue insuffisante du joint aux températures relativement élevées.

A cette fin, l'élément de carrosserie de l'invention, comprend une feuillure de baie, un pare-brise, un cordon de colle par lequel une première face du pare-brise est collée à la feuillure par sa périphérie, et un joint de finition bordant le pare-brise, le joint de finition comprenant une lèvre de liaison incorporée au cordon de colle.

Selon l'invention, le joint de finition pour un tel élément de carrosserie, présente une section conformée en pince et inclue des première et deuxième branches reliées par une base propre à s'appliquer sur le bord du pare-brise.

Les première et deuxième branches enserrent respectivement les première et deuxième faces du pare-brise.

La première branche est, en configuration montée du joint, interposée entre la première face du pare-brise et la feuillure.

La lèvre de liaison fait saillie de la première branche suivant une direction qui l'éloigné de la base et de la deuxième branche.

La lèvre de liaison, en configuration montée du joint, est appliquée contre la feuillure par le cordon de colle.

Le joint comprend en outre une lèvre d'acoustique et/ou d'aspect faisant saillie de la base suivant une direction qui l'éloigne des branches, et destinée, en configuration montée du joint, à venir s'appliquer élastiquement sur la feuillure.

Enfin, l'invention concerne aussi un procédé d'assemblage d'un pare-brise sur la feuillure d'une baie d'un véhicule automobile, comprenant une première opération consistant à border le pare-brise d'un joint de finition, une deuxième opération consistant à déposer un cordon de colle sur la périphérie du pare-brise, parallèlement au joint, et une troisième opération consistant à appliquer le pare-brise ainsi préparé sur la feuillure par son cordon de colle, ce procédé étant caractérisé en ce qu'il comprend, antérieurement à la première opération, une opération préliminaire consistant à doter le joint d'une lèvre qui, après la première opération, est tournée vers l'intérieur du pare-brise, et en ce que la troisième opération est mise en oeuvre en appliquant la lèvre sur la feuillure en même temps que le cordon de colle, ce dont il résulte que la lèvre s'incorpore au cordon de colle.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue en coupe d'un élément de carrosserie conforme à l'invention;
- la figure 2 est une vue en coupe à échelle agrandie d'un joint de finition conforme à l'invention; et
- les figures 3 et 4 illustrent, par des vues en coupe partielles d'un élément de carrosserie conforme à l'invention, des étapes de montage de cet élément.

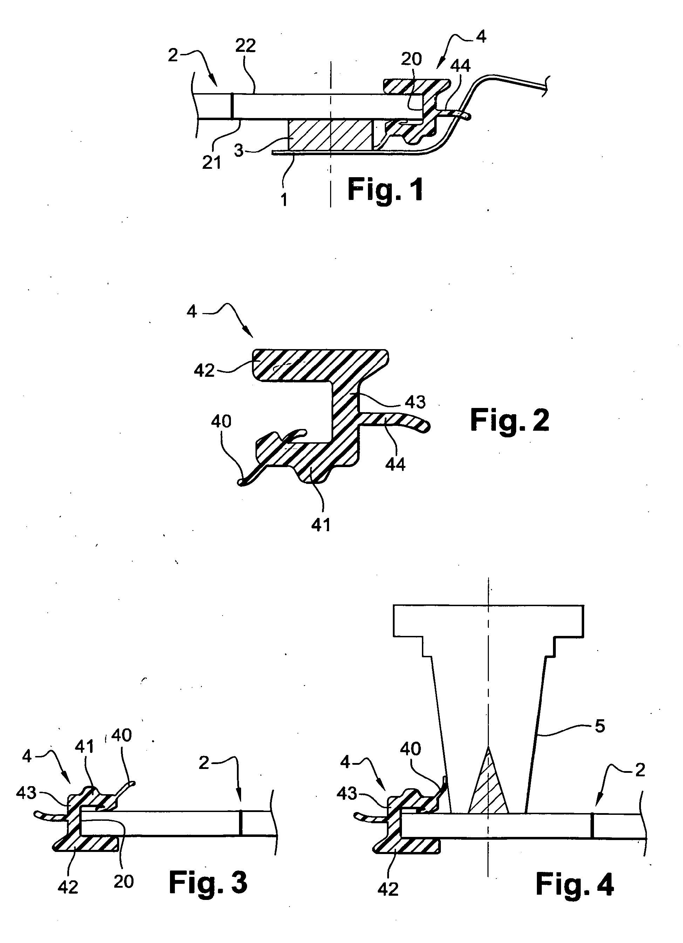

Comme annoncé précédemment, l'invention concerne notamment un élément de carrosserie pour véhicule automobile (figure 1), comprenant une feuillure de baie 1, un pare-brise 2, un cordon de colle 3, et un joint de finition 4.

Ce joint 4, qui est dépourvu d'armature et par exemple réalisé en matériau élastomère, présente (figure 2) une section conformée en pince.

Plus précisément, cette section est principalement formée de deux branches 41 et 42 reliées l'une à l'autre par une base 43.

Lors du montage (figure 3), le joint 4 est appliqué tout autour du pare-brise 2 en insérant le bord 20 de ce dernier entre les branches 41 et 42 du joint.

Après cette opération, le fond de la base 43 du joint 4 se trouve en contact avec le bord 20 du pare-brise 2 et les branches 41 et 42 enserrent les faces correspondantes 21 et 22 du pare-brise 2 à la manière d'une pince.

Le cordon de colle 3 est alors déposé, par une buse 5 (figure 4), sur la première face 21 du pare-brise 2, typiquement à une distance faible et constante du bord 20 de ce dernier.

Enfin, le pare-brise 2 ainsi préparé est appliqué sur la feuillure 1 par son cordon de colle 3 jusqu'à l'obtention d'un collage, la branche 41 du joint 4 étant, en configuration montée de ce dernier, interposée entre la face 21 du pare-brise 2 et la feuillure 1.

Selon une caractéristique de l'invention, le joint 4 présente une lèvre de liaison 40 qui fait saillie de la première branche 41 de la section de ce joint suivant une direction qui l'éloigne à la fois de la base 43 et de la deuxième branche 42 de cette section.

Après la première opération (figure 3), la lèvre de liaison 40 est tournée vers l'intérieur et le centre du pare-brise 2, côté face 21, et prend une direction moyenne de repos faisant typiquement un angle de l'ordre de 10° à 80° avec le plan du pare-brise à proximité de sa périphérie. Avantageusement, l'inclinaison de la lèvre 40 permet le passage de la buse 5 sans risquer de décrocher le joint 4 de la tranche du pare-brise.

Lors de la deuxième opération de montage, illustrée à la figure 4, la buse 5 déforme élastiquement la lèvre de liaison 40 en la repoussant vers l'extérieur.

Lors de la dernière opération de montage, qui permet le passage de la configuration illustrée par la figure 4 à la configuration finale illustrée à la figure 1, la lèvre de liaison 40 est appliquée sur la feuillure 1 en même temps que le cordon de colle 3.

De cette manière, la lèvre de liaison 40 est appliquée contre la feuillure 1 par le cordon de colle 3 et se trouve finalement incorporée à ce cordon de colle, ce qui lui confère, ainsi qu'à l'ensemble du joint 4, une résistance élevée à l'arrachement.

Par ailleurs, comme le montre l'ensemble des figures, le joint 4 comprend aussi, de préférence, une lèvre d'acoustique et/ou d'aspect 44 qui fait saillie de la base 43 suivant une direction qui l'éloigne des branches 41 et 42.

Cette lèvre d'acoustique et/ou d'aspect 44, qui est représentée sur la figure 1 dans une position fictive correspondant à sa position de repos pour en faciliter la reconnaissance, est en fait destinée à venir s'appliquer élastiquement sur la feuillure 1 en configuration montée du joint 4.

La présence de la lèvre 44, qui comble l'espace entre le joint 14 et la carrosserie 1, permet d'éviter les turbulences aérodynamiques et/ou l'apparition d'un interstice disgracieux.

## Revendications

1. Elément de carrosserie pour véhicule automobile, comprenant une feuillure de baie (1), un pare-brise (2), un cordon de colle (3) par lequel une première face (21) du pare-brise (2) est collée à la feuillure (1) par sa périphérie, et un joint de finition (4) bordant le pare-brise (2), le joint de finition (4) comprenant une lèvre de liaison (40) incorporée au cordon de colle (3), **caractérisé en ce que** ce le joint (4) présente une section conformée en pince et incluant des première et deuxième branches (41, 42) reliées par une base (43) propre à s'appliquer sur le bord (20) du pare-brise (2), **en ce que** les première et deuxième branches (41, 42) enserrent respectivement les première et deuxième faces (21, 22) du pare-brise (2), **en ce que** la première branche (41) est, en configuration montée du joint (4), interposée entre la première face (21) du pare-brise (2) et la feuillure (1), et **en ce que** la lèvre de liaison (40) fait saillie de la première branche (41) suivant une direction qui l'éloigne de la base (43) et de la deuxième branche (42).

2. Joint de finition suivant la revendication 1, **caractérisé en ce que** la lèvre de liaison (40), en configuration montée du joint (4), est appliquée contre la feuillure (1) par le cordon de colle (3).

3. Joint de finition suivant l'une quelconque des revendications 1 et 2, **caractérisé en ce qu'**il comprend en outre une lèvre d'acoustique et/ou d'aspect (44) faisant saillie de la base (43) suivant une direction qui l'éloigne des branches (41, 42), et destinée, en configuration montée du joint (4), à venir s'appliquer élastiquement sur la feuillure (1).

4. Procédé d'assemblage d'un pare-brise (2) sur la feuillure (1) d'une baie d'un véhicule automobile, comprenant une première opération consistant à border le pare-brise (2) d'un joint de finition (4), une deuxième opération consistant à déposer un cordon de colle (3) sur la périphérie du pare-brise (2), parallèlement au joint (4), et une troisième opération consistant à appliquer le pare-brise (2) ainsi préparé sur la feuillure (1) par son cordon de colle (3), **caractérisé en ce qu'**il comprend, antérieurement à la première opération, une opération préliminaire consistant à doter le joint (4) d'une lèvre de liaison (40) qui, après la première opération, est tournée vers l'intérieur du pare-brise (2), et **en ce que** la troisième opération est mise en oeuvre en appliquant la lèvre de liaison (40) sur la feuillure (1) en même temps que le cordon de colle (3), ce dont il résulte que la lèvre de liaison (40) s'incorpore au cordon de colle (3).

## Claims

1. Bodywork element for a motor vehicle, comprising an opening rebate (1), a windscreen (2), a bead of adhesive (3) via which a first face (21) of the windscreen (2) is bonded to the rebate (1) via its periphery, and a finishing strip (4) bordering the windscreen (2), the finishing strip (4) comprising a connecting lip (40) incorporated into the bead of adhesive (3), **characterized in that** the strip (4) has a cross section shaped into a pincer shape and including first and second branches (41, 42) connected by a base (43) able to press against the edge (20) of the windscreen (2), **in that** the first and second branches (41, 42) respectively grip the first and second faces (21, 22) of the windscreen (2), **in that** the first branch (41), when the strip (4) is in its mounted configuration, is interposed between the first face (21) of the windscreen (2) and the rebate (1), and **in that** the connecting lip (40) projects from the first branch (41) in a direction which takes it away from the base (43) and from the second branch (42).

2. Finishing strip according to Claim 1, **characterized in that** the connecting lip (40), when the strip (4) is in the mounted configuration, is pressed against the rebate (1) by the bead of adhesive (3).

3. Finishing strip according to either one of Claims 1 and 2, **characterized in that** it further comprises an acoustic and/or decorative lip (44) projecting from the base (43) in a direction which takes it away from the branches (41, 42) and which is intended, when the strip (4) is in the mounted configuration, to press elastically against the rebate (1).

4. Method of assembling a windscreen (2) onto the rebate (1) of an opening of a motor vehicle, comprising a first operation that involves edging the windscreen (2) with a finishing strip (4), a second operation that consists in laying a bead of adhesive (3) around the periphery of the windscreen (2), parallel to the strip (4), and a third operation that consists in applying the windscreen (2) thus prepared against the rebate (1) via its bead of adhesive (3), **characterized in that** this method involves, prior to the first operation, a preliminary operation that consists in endowing the strip (4) with a connecting lip (40) which, after the first operation, faces towards the inside of the windscreen (2), and **in that** the third operation is carried out while applying the connecting lip (40) to the rebate (1) at the same time as the bead of adhesive (3), the result of which is that the connecting lip (40) becomes incorporated into the bead of adhesive (3).

## Patentansprüche

1. Karosserieelement für ein Kraftfahrzeug, das einen Rahmenfalz (1), eine Windschutzscheibe (2), einen Klebstoffwulst (3), mittels dessen eine erste Seite (21) der Windschutzscheibe (2) über ihren Umfang an den Falz (1) geklebt wird, und eine Abschlussdichtung (4) enthält, die die Windschutzscheibe (2) umrandet, wobei die Abschlussdichtung (4) eine in den Klebstoffwulst (3) eingefügte Verbindungslippe (40) enthält, **dadurch gekennzeichnet, dass** die Dichtung (4) einen wie eine Klammer geformten Querschnitt hat, der erste und zweite Schenkel (41, 42) umfasst, die über eine Basis (43) verbunden sind, die sich auf den Rand (20) der Windschutzscheibe (2) auflegen kann, dass der erste und der zweite Schenkel (41, 42) die erste bzw. zweite Seite (21, 22) der Windschutzscheibe (2) umklammern, dass der erste Schenkel (41) in der eingebauten Konfiguration der Dichtung (4) zwischen die erste Seite (21) der Windschutzscheibe (2) und den Falz (1) eingefügt ist, und dass die Verbindungslippe (40) vom ersten Schenkel (41) in einer Richtung vorsteht, die sie von der Basis (43) und dem zweiten Schenkel (42) entfernt.

2. Abschlussdichtung nach Anspruch 1, **dadurch gekennzeichnet, dass** die Verbindungslippe (40) in der eingebauten Konfiguration der Dichtung (4) vom Klebstoffwulst (3) gegen den Falz (1) gedrückt wird.

3. Abschlussdichtung nach einem der Ansprüche 1 und 2, **dadurch gekennzeichnet, dass** sie außerdem eine Schallschutz- und/oder Dekorlippe (44) enthält, die von der Basis (43) in einer Richtung vorsteht, die sie von den Schenkeln (41, 42) entfernt, und in der eingebauten Konfiguration der Dichtung (4) dazu bestimmt ist, sich elastisch auf den Falz (1) aufzulegen.

4. Verfahren zum Einbau einer Windschutzscheibe (2) auf den Falz (1) eines Rahmens eines Kraftfahrzeugs, das einen ersten Vorgang, der darin besteht, die Windschutzscheibe (2) mit einer Abschlussdichtung (4) zu umranden, einen zweiten Vorgang, der darin besteht, einen Klebstoffwulst (3) auf dem Umfang der Windschutzscheibe (2), parallel zur Dichtung (4) anzubringen, und einen dritten Vorgang enthält, der darin besteht, die so vorbereitete Windschutzscheibe (2) über ihren Klebstoffwulst (3) auf den Falz (1) aufzulegen, **dadurch gekennzeichnet, dass** es vor dem ersten Vorgang einen vorbereitenden Vorgang enthält, der darin besteht, die Dichtung (4) mit einer Verbindungslippe (40) zu versehen, die nach dem ersten Vorgang zur Innenseite der Windschutzscheibe (2) weist, und dass der dritte Vorgang durchgeführt wird, indem die Verbindungslippe (40) zur gleichen Zeit wie der Klebstoffwulst (3) auf den Falz (1) gedrückt wird, was dazu führt, dass die Verbindungslippe (40) sich in den Klebstoffwulst (3) einfügt.
